**Europäisches Patentamt**

**European Patent Office**

**Office européen des brevets**

(19)

(11) Veröffentlichungsnummer: **0 170 935**
**B1**

(12)

# EUROPÄISCHE PATENTSCHRIFT

(45) Veröffentlichungstag der Patentschrift:
**25.11.87**

(21) Anmeldenummer: **85108784.1**

(22) Anmeldetag: **13.07.85**

(51) Int. Cl.⁴: **C 08 G 63/60**

(54) **Thermotrope aromatische Polyester mit hoher Steifigkeit, Verfahren zu ihrer Herstellung und ihre Verwendung zur Herstellung von Formkörpern, Filamenten, Fasern und Folien.**

(30) Priorität: **28.07.84 DE 3427886**

(43) Veröffentlichungstag der Anmeldung:
**12.02.86 Patentblatt 86/7**

(45) Bekanntmachung des Hinweises auf die Patenterteilung:
**25.11.87 Patentblatt 87/48**

(84) Benannte Vertragsstaaten:
**DE FR GB IT**

(56) Entgegenhaltungen:
**GB-A-2 058 102**

**CHEMICAL ABSTRACTS, Band 68, Nr. 7, 12. Februar 1968, Seite 2953, Nr. 30210q, Columbus, Ohio, US; I.K. KOZINENKO et al.: "Production of bis(p-carboxyphenyl) ketone and use of its diacid chloride in interphase polycondensation"**
**CHEMICAL ABSTRACTS, Band 78, Nr. 22, 4. Juni 1973, Seite 3, Nr. 136711a, Columbus, Ohio, US; N.K. MOSHCHINSKAYA et al.: "Synthesis and properties of a polyarylate of 4,4'-benzophenonedicarboxylic acid and 2,2-bis(4-hydroxyphenyl)propane"**
**CHEMICAL ABSTRACTS, Band 102, Nr. 18, 6. Mai 1985, Seite 72, Nr. 150777x, Columbus, Ohio, US; TAKUMA JINDA et al.: "Synthesis, thermal and fibrous properties of polyarylates derived from hydroquinone and 3,4'-oxy- and /or 3,4'-**

(73) Patentinhaber: **BAYER AG, Konzernverwaltung RP Patentabteilung, D-5090 Leverkusen 1 Bayerwerk (DE)**

(72) Erfinder: **Dicke, Hans- Rudolf, Dr., Bodelschwinghstrasse 16, D-4150 Krefeld (DE)**
Erfinder: **Kauth, Hermann, Dr., Kolpingstrasse 34, D-4150 Krefeld 11 (DE)**

(56) Entgegenhaltungen: (Fortsetzung)
**carbonyldibenzoic acid"**

**0 170 935**

**Beschreibung**

Die Erfindung betrifft hochmolekulare thermotrope vollaromatische Polyester mit hoher Steifigkeit und günstiger Schmelzviskosität, ein Verfahren zu ihrer Herstellung und ihre Verwendung zur Herstellung von Formkörpern, Filamenten, Fasern und Folien.

Als "thermotrop" bezeichnet man solche Substanzen, die flüssigkristalline Schmelzen bilden. Thermotrope Polykondensate sind hinreichend bekannt, vergleiche z. B.

F. E. McFarlane et al., Liquid Crystal Polymers II, Contemporary Topics in Polymer Science, Vol. 2, Plenum Publishing Corporation, 1977;

W. J. Jackson und H. F. Kuhfuss, J. Polymer Science, Polymer Chem. Ed. 14, 2042 (1976);

W. C. Wooten et al. in A. Ciferri "Ultra-high Modulus Polymers", Applied Science Publ., London 1978, S. 362 f.;

A. Blumstein et al., "Liquid Crystalline Order in Polymers", Academic Press 1978;

A. Ciferri, W. R. Krigbaum, R. B. Meyer "Polymer Liquid Crystals", Academic Press, New York, 1982;

EP-A-1185, 1340, 8855, 11 640, 15 856, 17 310, 18 145, 18 709, 22 344, 44 205, 49 615, 51 934, 67 618, 71 447, 72 155, 76 133;

US-PS 3 804 805, 3 991 013, 3 991 014, 4 066 620, 4 067 852, 4 075 262, 4 083 829, 4 130 545, 4 140 846, 4 153 779, 4 161 470, 4 169 933, 4 181 792, 4 188 476, 4 201 856, 4 224 433, 4 230 817, 4 238 598, 4 256 624, 4 267 304, 4 284 757, 4 285 852, 4 311 824, 4 337 191, 4 347 349;

WO 79/797, 79/1034, 79/1040.

Der flüssigkristalline Zustand von Polymerschmelzen läßt sich mit Hilfe eines Polarisationsmikroskops untersuchen: für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Schichtdicke der untersuchten Polykondensatschmelzen betrug 100 µm.

Die Untersuchung der Polymeren erfolgte nach dem Aufschmelzen der Proben bei Temperaturen zwischen 280 und 400°C. Sofern in diesem gesamten Bereich oder in einem Teil davon eine Aufhellung der zwischen den gekreuzten Nicolschen Prismen beobachteten Schmelze auftrat, wurde das Polykondensat als thermotrop flüssigkristallin eingestuft.

Die flüssigkristallinen Polykondensate zeigen in der Meßanordnung Werte über 1 Skalenteil, meist Werte von 3 bis 90 Skalenteilen. Für amorphe Schmelzen, z. B. aromatische Polycarbonate, wurden dagegen werte von weniger als 0,1 Skalenteil gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssigkristalliner Komponenten mittels Röntgenweitwinkelstreuung in der Schmelze nachzuweisen, wie es z. B. bei G.W. Gray und P.A. Windsor, "Plastic Crystals, Physico-Chemical Properties and Methods of Investigation", insbesondere Chapter 3, John Wiley & Sons, New York, Sydney, Toronto 1974 beschrieben ist.

Die DE-OS 20 25 971 betrifft hochmolekulare vollaromatische Polyester auf Basis von p-Hydroxybenzoesäure, aromatischen Dicarbonsäuren (wie Terephthal- oder Isophthalsäure) und Diphenolen (wie Hydrochinon oder 4,4'-Dihydroxybiphenyl). Aufgrund der verwendeten Komponenten sind diese Polyester thermotrop. Sie können z. B. zu Fasern verarbeitet werden. Von den 13 Polyestern der Beispiele schmilzt ein einziger unter 300°C. Diese Polyester sind also schlecht verarbeitbar.

Thermotrope flüssigkristalline Polyester mit Verarbeitungstemperaturen unterhalb 380°C können erhalten werden, indem man zusätzlich zu den in der DE-OS 2 025 971 genannten Struktureinheiten auch 2,6-disubstituierte Naphthalinderivate zum Aufbau der Produkte verwendet.

Polyester mit 2,6-Dihydroxynaphthalin als kennzeichnendem Baustein sind beispielsweise aus den veröffentlichten europäischen Patentanmeldungen 1340 und 18145 bekannt. Die Verwendung von 2,6-Naphthalindicarbonsäure zum Aufbau von thermotropen aromatischen Polyestern wird z. B. in den veröffentlichten europäischen Patentanmeldungen 1185, 18973 und 63881 beschrieben. 6-Hydroxy-2-naphthalincarbonsäure als wesentliche Monomereinheit wurde ebenfalls schon in einer Reihe von Druckschriften beschrieben, z. B. in den veröffentlichten europäischen Patentanmeldungen 22344, 44205, 49615, 49617, 67618 und 71447.

Die in den aufgeführten Druckschriften beschriebenen Polyester besitzen teilweise hervorragende mechanische Eigenschaften wie hohen E-Modul und hohe Festigkeit. Zum Erreichen dieses Eigenschaftsniveaus sind allerdings relativ große Mengen an 2,6-disubstituierter Naphthalinverbindung notwendig, üblicherweise mehr als 20 Mol-%, bezogen auf die eingesetzten monomeren Substanzen. Aufgrund der komplizierten Herstellbarkeit und der damit verbundenen hohen Herstellungskosten der 2,6-disubstituierten Naphthalinderivate ist dies ökonomisch unbefriedigend.

Einige in jüngster Zeit veröffentlichte Patentanmeldungen beanspruchen die Herstellung von thermotropen, aus der Schmelze verarbeitbaren Polyestern unter Verwendung geringerer Mengen an 2,6-disubstituierten Naphthalinderivaten, so z. B. die europäischen Patentanmeldungen 76133, 92617 und 102160.

Aufgabe der Erfindung war es, thermotrope vollaromatische Polyester bereitzustellen, die gegenüber den

2

Polyestern der DE-OS 2 025 971 besser verarbeitbar sind und dennoch hervorragende mechanische Eigenschaften aufweisen.

Bevorzugte neue thermotrope vollaromatische Polyester sollten bei einer Temperatur unterhalb 370° C, vorzugsweise unterhalb 350° C, insbesondere unterhalb 330° C, thermoplastisch verarbeitbar sein.

Weitere Aufgabe der Erfindung war es, thermotrope vollaromatische Polyester zur Verfügung zu stellen, die im Gegensatz zu den in den obengenannten europäischen Patentanmeldungen beschriebenen Produkten keine 2,6-di-substituierten Naphthalinverbindungen enthalten, die aber dennoch zu Formteilen mit hervorragender mechanischer Festigkeit verarbeitet werden können.

Bevorzugte neue thermotrope vollaromatische Polyester sollten einen Biege-E-Modul von mindestens 6000, vorzugsweise von mindestens 7000, insbesondere von mindestens 8000 MPa besitzen. Außerdem sollten diese bevorzugten Polyester eine Biegefestigkeit von mindestens 100, vorzugsweise von mindestens 120, insbesondere von mindestens 140 MPa haben.

Überraschenderweise wurde gefunden, daß vollaromatische Polyester, die einkondensierte Reste von p-Hydroxybenzoesäure, Hydrochinon und/oder 4,4'-Dihydroxydiphenyl sowie einerseits von Isophthalsäure und gegebenenfalls Terephthalsäure und andererseits von 3,4'- und/oder 4,4'-Benzophenondicarbonsäure enthalten, die gewünschten vorteilhaften Eigenschaften aufweisen.

Gegenstand der Erfindung sind thermotrope vollaromatische Polyester auf Basis von

(a) (ggf. substituierter) p-Hydroxybenzoesäure,
(b) Hydrochinon und/oder 4,4'-Dihydroxydiphenyl,
(c) Isophthalsäure und gegebenenfalls Terephthalsäure
und
(d) 3,4'- und/oder 4,4'-Benzophenondicarbonsäure,
wobei die Polyester die einkondensierten Reste
(a) in einer Menge von 40 bis 80, vorzugsweise 50 bis 75, insbesondere 60 bis 70 Mol-%,
die einkondensierten Reste
(c) in einer Menge von 15 bis 58, vorzugsweise 20 bis 46, insbesondere 20 bis 35 Mol-%,
und die einkondensierten Reste
(d) in einer Menge von 2 bis 40, vorzugsweise 4 bis 30, insbesondere 5 bis 20 Mol-%,

jeweils bezogen auf die Summe der einkondensierten Reste (a), (c) und (d), enthalten, das Molverhältnis der einkondensierten Reste b/(c+d) 0,95 bis 1,05 und der Anteil Terephthalsäurereste an den Resten (c) maximal 30 Mol-% betragen.

Bevorzugte (a) p-Hydroxybenzoesäuren sind durch $C_1$-$C_4$-Alkyl, $C_1$-$C_4$-Alkoxy, $C_6$-$C_{10}$-Aryl, $C_7$-$C_{12}$-Alkylaryl (wie Phenyl, Tolyl, Naphthyl) oder Halogen (vorzugsweise Chlor), kernsubstituierte p-Hydroxybenzoesäuren, wie z. B. 4-Hydroxy-2-methylbenzoesäure, 4-Hydroxy-3-methyl-benzoesäure, 2 Ethyl-4-hydroxybenzoesäure, 3-Ethyl-4-hydroxybenzoesäure, 4-Hydroxy-2-phenylbenzoe-säure, 4-Hydroxy-3-phenylbenzoesäure oder 3-Chlor-4-hydroxybenzoesäure, vorzugsweise jedoch unsubstituierte p-Hydroxybenzoesäure selbst.

Die Herstellung der Monomereinheiten (d) ist seit langem bekannt (siehe z. B.: Limpricht, A. 312 92, 96 oder H. Staudinger, K. Clar, B. 44 1632 oder L. Lavaux A. ch. (8) 21 144). 4,4'-Benzophenondicarbonsäure kann auf einfache Art aus den preiswerten Rohstoffen Toluol und Phosgen gewonnen werden. Dabei wird im ersten Schritt aus Phosgen und Toluol 4,4'-Dimethylbenzophenon erhalten, das dann in der zweiten Stufe zur 4,4'-Benzophenondicarbonsäure oxidiert wird.

Die erfindungsgemäßen Polyester können die Reste der Verbindungen (a) bis (d) in statistischer Verteilung, in Segmenten oder in Blöcken enthalten. Betreffend Komponente (a) ist darauf zu achten, daß längere Blöcke den Schmelzpunkt und die Schmelzviskosität stark erhöhen können.

Als Endgruppen können die erfindungsgemäßen Polyester -COOH, -H, -OH, -$OC_6H_5$, Acyloxy oder von Kettenabbrechern herrührende Reste enthalten. Bevorzugte Kettenabbrecher sind monofunktionelle aromatische Hydroxylverbindungen, wie 4-Hydroxydiphenyl, p-Nonylphenol, 4-(1,1,3,3-Tetramethylbutyl)-phenol, β-Naphthol, und aromatische Monocarbonsäuren, wie Diphenylcarbonsäuren und Naphthalincarbonsäuren. Kettenabbrecher können in Mengen von 0,5 bis 5 Mol-%, bezogen auf die Summe der Komponenten a und b, eingesetzt werden.

Gegebenenfalls können auch verzweigende drei- oder höherfunktionelle - vorzugsweise aromatische - Monomere in Mengen von 0,1 bis 1 Mol-%, bezogen auf die Summe der Komponenten a und b, wie z. B. Phoroglucin, 1,3,5-Benzoltricarbonsäure und 3,5-Dihydroxybenzoe-säure, eingesetzt werden.

Die erfindungsgemäßen Polyester besitzen in der Regel eine inhärente Viskosität von mindestens 0,5, vorzugsweise von mindestens 1,0, dl/g (gemessen an einer Lösung von 5 mg Polyester/ml p-Chlorphenol bei 45° C). Sollten Polyester in p-Chlorphenol unlöslich sein, wird angenommen, daß sie die angegebene Mindestviskosität besitzen; sie sind somit erfindungsgemäß, sofern sie den Parametern des Hauptanspruchs genügen.

Die erfindungsgemäßen Polyester besitzen vorzugsweise eine Schmelzviskosität von weniger als 1000 Pa.s, gemessen bei einer Schergeschwindigkeit von $10^3$ sec$^{-1}$ unter Verwendung einer Düse mit einem Länge/Durchmesser-Verhältnis von 20 bei einer Temperatur von weniger als 360° C, vorzugsweise weniger als 330° C.

Die erfindungsgemäßen Polyester können nach verschiedenen Verfahren hergestellt werden, z. B. durch Kondensation bzw. Umesterung der reaktiven Derivate, der Verbindungen (a) bis (d) z. B. ihrer Ester bzw.

Säurechloride, und anschließende Polykondensation.

Beispiele für bevorzugte Ausgangsverbindungen sind also ihre Arylester, ihre Acylester und ihre Säurechloride.

Nach einem bevorzugten Syntheseverfahren werden die niederen Acrylester, vorzugsweise die Acetate, der Verbindungen (a) und (b) mit Isophthalsäure (c) und gegebenenfalls Terephthalsäure (c) sowie Benzophenondicarbonsäure (d) umgesetzt, wobei die Acylester auch in situ hergestellt werden können.

Diese Reaktionen können in der Schmelzphase durchgeführt werden; möglich ist jedoch auch die Reaktion in Gegenwart eines flüssigen wärmeüberleitenden Mediums, das einen hohen Siedepunkt hat.

Die Reste der Verbindungen (a) bis (d) werden im Verhältnis der Ausgangskomponenten in den Polyester eingebaut.

Es kann zweckmäßig sein, sowohl die Kondensations- bzw. Umesterungsreaktionen als auch die Polykondensationsreaktionen katalytisch zu beschleunigen. Derartige Katalysatoren sind bekanntlich z. B. Lewis-Säuren und Halogenwasserstoffsäuren; Oxide, Hydride, Hydroxide, Halogenide, Alkoholate, Phenolate, Salze anorganischer oder organischer Säuren (vorzugsweise Carbonsäuresalze), Komplexsalze oder Mischsalze der Erdalkalimetalle, wie z. B. Magnesium, Calcium; der Nebengruppenelemente, wie z. B. Vanadium, Titan, Mangan, Cobalt, Nickel, Zink, Lanthan, Cer, Zirkonium oder der Elemente aus anderen Gruppen des Periodensystems, wie z. B. Germanium, Zinn, Blei und Antimon oder auch die Alkalimetalle oder Erdalkalimetalle selbst, insbesondere Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Vanadyl-$C_1$-$C_8$-alkoxide, Titanalkoxide wie Titantetrabutylat, Titantetrapropylat, Alkoxytitansilikate, Zirkoniumbutylat, Zirkoniumpropylat, Titantetraphenolat, Natriumphenolat, Germaniumdioxid, Antimontrioxid, Dialkyl- und Diarylzinnoxid, Di-butylzinn-diacetat, Di-butyl-dimethoxy-zinn. Besonders bevorzugt sind Magnesium-, Mangan-, Natrium-, Kalium- und Zinkacetat.

Die Katalysatormengen betragen vorzugsweise 0,001 bis 1, insbesondere 0,01 bis 0,2, Gew.-%, bezogen auf das Gesamtgewicht der eingesetzten Monomeren.

Die erfindungsgemäßen Polyester können bei Temperaturen von 160 bis 370°C hergestellt werden, wobei man im allgemeinen die Reaktion bei niedrigen Temperaturen beginnt und im Verlaufe der Reaktionsfortschreitung kontinuierlich die Temperatur erhöht. Bei nachlassender Reaktionsgeschwindigkeit kann ein Vakuum angelegt werden, wobei der Druck vorzugsweise kontinuierlich von Normaldruck bis ca. 0,1 mbar gesenkt wird.

Das erhaltene Produkt kann - vorzugsweise in Granulatform - einer Festphasennachkondensation unter vermindertem Druck bei Temperaturen von 200 bis 300°C unterworfen werden; nach 5 bis 25 Stunden hat sich das Molekulargewicht erhöht und die daraus resultierenden Eigenschaften des Polyesters sind merklich verbessert.

Weiterer Gegenstand der Erfindung ist also ein Verfahren zur Herstellung der neuen Polyester durch Umsetzung der Komponenten (a) bis (d) bzw. ihrer reaktionsfähigen Derivate, die auch in situ hergestellt werden können, gegebenenfalls in Gegenwart von Kettenabbrechern, Verzweigungsmitteln und Katalysatoren, bei Temperaturen von 160 bis 370°C, gegebenenfalls unter vermindertem Druck.

Die erfindungsgemäßen thermotropen Polyester können infolge ihrer relativ geringen Schmelzviskosität vorteilhaft aus der Schmelze zu Spritzgußformteilen, Filamenten, Fasern, Bändern und Filmen verarbeitet werden, wobei durch auftretende Scherkräfte eine Molekülorientierung erzielt wird, die in hohem Maße von der Stärke der Scherkräfte beeinflußt wird. Desweiteren zeigen sie eine ausgeprägte Strukturviskosität, das heißt, daß die Schmelzviskosität bei Erhöhung der Scherkräfte stark abfällt. Geeignete Verarbeitungsverfahren sind Spritzguß, Extrusion, Pressen und Schmelzspinnen.

Aus den erfindungsgemäßen Polyestern können Formteile hoher Zugfestigkeit und großer Dimensionsstabilität hergestellt werden. Da die Polyester außerordentlich chemikalienresistent und flammwidrig sind, eignen sie sich bevorzugt zur Herstellung von

- elektrotechnischen Artikeln, wie z. B. Isolatoren, gedruckten Schaltungen, Steckkontakten, Armaturenteilen,
- Teilen chemisch-technischer Apparate, wie z. B. Rohren, Behälterauskleidungen, Rotoren, Gleitlagern, Dichtungen,
- Teilen der Flugzeuginnenausstattung,
- Teilen medizinisch-technischer Geräte, wie z. B. Bauteilen von Klimaanlagen, Ventilteilen.

Die erfindungsgemäßen Polyester können aber auch als Überzugs- und Beschichtungsmaterial (pulverförmig oder dispergiert) verwendet werden. Auch zur Herstellung verstärkter oder gefüllter Formmassen mit einem Verstärker- bzw. Füllstoffgehalt von 5 bis 65 Gew.-%, bezogen auf verstärkte bzw. gefüllte Formmasse, sind sie bestens geeignet.

Weiterer Gegenstand der Erfindung ist also die Verwendung der neuen Polyester zur Herstellung von Formkörpern, Filamenten, Fasern und Filmen.

## Beispiele

Die Prüfung der Schlagzähigkeit $a_n$ und Kerbschlagzähigkeit $a_k$ erfolgte an Normkleinstäben gemäß DIN 53 453 (ISO/R 179) bei 23°C jeweils an 10 Prüfkörpern. Die Bestimmung der Biegefestigkeit wurde an Normkleinstäben gemäß DIN 53 452 (ISO R 178) durchgeführt. Der Biege-E-Modul wurde gemäß DIN 53 457 ermittelt. Die Messung der Wärmeformbeständigkeit erfolgte durch Bestimmungen der Vicat-B-Erweichungstemperatur gemäß DIN 53 460 (ISO 306).

## Vergleich 1

In ein 1 l-Planschliffgefäß mit Planschliffdeckel, Rührer, Stickstoffeinleitung und einem Destillationsaufsatz, der mit einem Kühler verbunden war, wurden die folgenden Substanzen eingewogen:

2,4 Mol ≙ 331,49 g p-Hydroxybenzoesäure,
1,2 Mol ≙ 199,36 g Terephthalsäure,
1,2 Mol ≙ 202,34 g 2,6-Dihydroxynaphthalin,
5,76 Mol ≙ 588,0 g Acetanhydrid,
0,5 g Magnesiumacetat und
0,5 g Antimontrioxid.

Unter Stickstoffatmosphäre wurde mittels Salzbad auf 170°C erhitzt. Sobald die Destillation von Essigsäure nachließ (nach ca. 35 Minuten), wurde die Temperatur im Reaktionsgefäß im Verlauf einer weiteren Stunde auf 330°C erhöht. Nach Beendigung der Destillation wurde der Druck im Verlauf von 30 Minuten bis auf ca. 1 mbar gesenkt.

Während dieser Vakuumphase nahm die Viskosität der entstandenen Polymerschmelze stark zu. Die Schmelze wurde daher langsamer gerührt.

Am Ende dieser Phase war eine Gesamtmenge von 670 g Essigsäure (enthält restliches Acetanhydrid) aufgefangen worden.

Der erhaltene grau-braune Polyester wurde gemahlen und bei 250°C einer Festphasennachkondensation unterworfen (bei einem Vakuum von ca. 1 mbar, 20 Stunden).

Der so hergestellte Polyester war in p-Chlorphenol unlöslich. Eine optisch antisotrope Schmelzphase wurde im Bereich von 290 bis 400°C beobachtet.

## Beispiel 1

In die in Vergleich 1 beschriebene Reaktionsapparatur wurden die folgenden Substanzen eingefüllt:

2,4 Mol ≙ 331,49 g p-Hydroxybenzoesäure,
1,44 Mol ≙ 158,56 g Hydrochinon,
1,2 Mol ≙ 199,36 g Isophthalsäure,
0,24 Mol ≙ 64,8 g 4,4'-Benzophenondicarbonsäure,
6,3 Mol ≙ 643,17 g Acetanhydrid,
0,5 g Magnesiumacetat und
0,5 g Germaniumdioxid.

Unter Stickstoffatmosphäre wurde mittels Salzbad auf 170°C aufgeheizt. Nach einer Stunde bei 170°C wurde die Reaktionstemperatur auf 200°C und im Verlauf von weiteren 4 Stunden auf 320°C erhöht. Nach Beendigung der Destillation wurde der Druck im Verlauf von ca. 20 Minuten bis auf 2,5 mbar gesenkt. Während der Vakuumphase blieb das Produkt gut rührbar. Am Ende dieser Phase war eine Gesamtmenge von 730 g Essigsäure (enthält restliches Acetanhydrid) aufgefangen worden.

Das erhaltene hell-beige Produkt wurde gemahlen und bei 250°C einer Festphasennachkondensation unterworfen (ca. 1 mbar/24 Stunden). Die inhärente Viskosität des so behandelten Polyesters betrug 1,20 dl/g. Im Bereich von 310°C bis 400°C wurde eine optisch anisotrope Schmelzphase beobachtet.

## Beispiele 2 bis 5

In der in Beispiel 1 beschriebenen Reaktionsapparatur und nach dem dort beschriebenen Verfahren wurden weitere Polyester hergestellt. Art und Menge der Ausgangsprodukte sind in Tabelle 1 aufgeführt.

**Tabelle 1**

| Beispiel | (a) (Mol) | (b) (Mol) | (c) (Mol) | (d) (Mol) | | Acetanhydrid (Mol) | $\eta$inh (dl/g) | anisotrope Schmelze |
|---|---|---|---|---|---|---|---|---|
| 2 | 2,6 | 1,4 | Hy 1,2 | IS 0,2 | 4,4'-DCB | 6,4 | 1,96 | 290 - 400° C |
| 3 | 1,685 | 1,56 | Hy 1,39 | IS 0,17 | 4,4'-DCB | 5,7 | 1,05 | 260 - 400° C |
| 4 | 2,6 | 1,8 | Hy 1,1 | IS 0,4 | 4,4'-DCB | 7,4 | 2,46 | 320 - 400° C |
| | | | 0,3 | TS | | | | |
| 5 | 2,4 | 1,44 | DOD,2 | IS 0,24 | 4,4'-DCB | 6,3 | 1,84 | 300 - 400° C |
| 6 | 2,4 | 1,44 | Hy 1,2 | IS 0,24 | 3,4'-DCB | 6,3 | 2,31 | 310 - 400° C |

Abkürzungen: Hy = Hydrochinon;
DOD= 4,4'-Dihydroxydiphenyl;
IS = Isophthalsäure;
TS = Terephthalsäure;
DCB= Benzophenondicarbonsäure

Zur Prüfung der mechanischen Eigenschaften wurden aus den Polyestern des Vergleichs 1 und der Beispiele 1 bis 6 durch Spritzguß Normkleinstäbe hergestellt. In Tabelle 2 sind die gemessenen Werte aufgeführt.

**Tabelle 2**

| Beispiel | Vicat B (°C) | $a_n/a_k$ (kJ/m²) | Biegefestigkeit (MPa) | Biege-E-Modul (MPa) | Massetemperatur (°C) |
|---|---|---|---|---|---|
| Vergleich 1 | 162 | 13/10 | 157 | 10448 | 330 |
| 1 | 141 | 12/8 | 163 | 10270 | 340 |
| 2 | 145 | 6/1,5 | 144 | 8790 | 330 |
| 3 | 146 | 27[x]/22[x] | 15 | 9133 | 340 |
| 4 | 144 | 15[xx]/8 | 154 | 10400 | 330 |
| 5 | 151 | 18[xx]/10 | 149 | 10120 | 340 |
| 6 | 158 | 12/9 | 164 | 10820 | 330 |

[x] = angebrochen
[xx] = z.T. angebrochen

## Patentansprüche

1. Thermotrope vollaromatische Polyester auf Basis von
(a) (gegebenenfalls substituierter) p-Hydroxybenzoesäure,
(b) Hydrochinon und/oder 4,4'-Dihydroxydiphenyl,
(c) Isophthalsäure und gegebenenfalls Terephthalsäure,
(d) 3,4'- und/oder 4,4'-Benzophenondicarbonsäure

wobei die Polyester die einkondensierten Reste
(a) in einer Menge von 40 bis 80 Mol-%,

die einkondensierten Reste
(c) in einer Menge von 15 bis 58 Mol-%,

die einkondensierten Reste
(d) in einer Menge von 2 bis 40 Mol-%,

jeweils bezogen auf die Summe der einkondensierten Reste (a), (c) und (d), enthalten, das Molverhältnis der einkondensierten Reste b/(c+d) 0,95 bis 1,05 und der Anteil Terephthalsäurereste an den Resten (c) maximal 30 Mol-% betragen.

2. Polyester nach Anspruch 1, dadurch gekennzeichnet, daß sie die einkondensierten Reste
(a) in einer Menge von 50 bis 75 Mol-%,

die einkondensierten Reste
(c) in einer Menge von 20 bis 46 Mol-%

6

und die einkondensierten Reste
(d) in einer Menge von 4 bis 30 Mol-%,

jeweils bezogen auf die Summe der einkondensierten Reste (a), (c) und (d), enthalten.

3. Polyester nach Ansprüchen 1 und 2, dadurch gekennzeichnet, daß sie die einkondensierten Reste
(a) in einer Menge von 60 bis 70 Mol-%,

die einkondensierten Reste
(c) in einer Menge von 20 bis 35 Mol-%,

und die einkondensierten Reste
(d) in einer Menge von 5 bis 20 Mol-%,

jeweils bezogen auf die Summe der einkondensierten Reste (a), (c) und (d), enthalten.

4. Verfahren zur Herstellung der Polyester nach Ansprüchen 1 bis 3 durch Umsetzung der reaktionsfähigen Derivate der Komponenten (a) bis (d), die auch in situ hergestellt werden können, gegebenenfalls in Gegenwart von Kettenabbrechern, Verzweigungsmitteln und Katalysatoren, bei Temperaturen von 160 bis 370°C, gegebenenfalls unter vermindertem Druck.

5. Verfahren nach Anspruch 4, dadurch gekennzeichnet, daß sich eine Festphasennachkondensation anschließt.

6. Verwendung der Polyester nach Ansprüchen 1 bis 3, zur Herstellung von Formkörpern, Filamenten, Fasern und Filmen.

## Claims

1. Thermotropic fully aromatic polyesters based on
    (a) (optionally substituted) p-hydroxybenzoic acid,
    (b) hydroquinone and/or 4,4'-dihydroxydiphenyl,
    (c) isophthalic acid and optionally terephthalic acid and
    (d) 3,4'- and/or 4,4'-benzophenone dicarboxylic acid,

the polyesters containing the condensed radicals
    (a) in a quantity of 40 to 80 mol %,

the condensed radicals
    (c) in a quantity of 15 to 58 mol %, and

the condensed radicals
    (d) in a quantity of 2 to 40 mol %,

based, in each case, on the sum of the condensed radicals (a), (c) and (d), the molar ratio of the condensed radicals, $b/(c+d)$ being 0.95 to 1.05 and the proportion of radicals (c) which are terephthalic acid radicals being at most 30 mol %.

2. Polyesters according to Claim 1, characterised in that they contain the condensed radicals
    (a) in a quantity of 50 to 75 mol %,

the condensed radicals
    (c) in a quantity of 20 to 46 mol %,

and the condensed radicals
    (d) in a quantity of 4 to 30 mol %,

based, in each case, on the sum of the condensed radicals (a), (c) and (d).

3. Polyesters according to Claims 1 and 2, characterised in that they contain the condensed radicals
    (a) in a quantity of 60 to 70 mol %,

the condensed radicals
    (c) in a quantity of 20 to 35 mol,

and the condensed radicals
    (d) in a quantity of 5 to 20 mol %,

based, in each case, on the sum of the condensed radicals (a), (c) and (d).

**0 170 935**

4. Process for the production of the polyesters according to Claims 1 to 3 by reacting the reactive derivatives of components (a) to (d), which can also be prepared in situ, optionally in the presence of chain stoppers, branching agents and catalysts, at temperatures of 160 to 370°C, optionally under reduced pressure.

5. Process according to Claim 4, characterised in that a solid-phase post-condensation is subsequently carried out.

6. Use of the polyesters according to Claims 1 to 3 for the production of mouldings, filaments, fibres and films.

**Revendications**

1. Polyesters purement aromatiques thermotropes, à base
(a) d'acide p-hydroxybenzoïque (éventuellement substitué),
(b) d'hydroquinone et/ou de 4,4'-dihydroxydiphényle,
(c) d'acide isophtalique et éventuellement d'acide téréphtalique,
(d) d'acide 3,4'- et/ou 4,4'-benzophénonedicarboxylique,

les polyesters contenant
les restes condensés (a) en quantité de 40 à 80 moles %,
les restes condensés (c) en quantité de 15 à 58 moles %,
et les restes condensés (d) en quantité de 2 à 40 moles %,

rapportées chaque fois à la somme des restes condensés (a), (c) et (d), le rapport molaire des restes condensés b/(c+d) étant de 0,95 à 1,05 et la fraction de restes d'acide téréphtalique par rapport aux restes (c) étant au maximum de 30 moles %.

2. Polyesters selon la revendication 1, caractérisés en ce qu'ils contiennent
les restes condensés (a) en quantité de 50 à 75 moles %,
les restes condensés (c) en quantité de 20 à 46 moles %,
et les restes condensés (d) en quantité de 4 à 30 moles %,

rapportées chaque fois à la somme des restes condensés (a), (c) et (d).

3. Polyesters selon les revendications 1 et 2, caractérisés en ce qu'ils contiennent
les restes condensés (a) en quantité de 60 à 70 moles %,
les restes condensés (c) en quantité de 20 à 35 moles %,
et les restes condensés (d) en quantité de 5 à 20 moles %,

rapportées chaque fois à la somme des restes condensés (a), (c) et (d).

4. Procédé pour la fabrication des polyesters selon les revendications 1 à 3 par réaction des dérivés réactifs des composants (a) à (d), qui peuvent aussi être fabriqués in situ, éventuellement en présence d'agents de rupture de chaînes, d'agents réticulants et de catalyseurs, à des températures de 160 à 370°C, éventuellement sous pression réduite.

5. Procédé selon la revendication 4, caractérisé en ce qu'il est suivi d'une postcondensation en phase solide.

6. Utilisation des polyesters selon les revendications 1 à 3 pour la fabrication de pièces moulées, de filaments, de fibres et de films.

8